# EUROPEAN PATENT APPLICATION

(11) **EP 1 447 008 A1**
(43) Date of publication of application: **18.08.2004**
(21) Application number: 03425082.9
(22) Date of filing: 12.02.2003
(51) Int. Cl.: A23C 19/09

(54) **Process for preparing a multilayer cheese product and multilayer cheese product so obtained**

(71) Applicant: S.p.A. Egidio Galbani, 20066 Melzo (IT)
(72) Inventor: Mattei, Gianfranco, 20066 Melzo (IT)
(74) Representative: Long, Giorgio

(57) **Abstract**

This invention relates to a process for preparing a multilayer cheese product comprising at least a first layer formed of a cheese product selected from a cream-based cheese, a fresh cheese and a milk-based product obtainable by the acid coagulation of whey and at least a second layer formed of a processed cheese product comprising the stage of:
a) subjecting the components which form the processed cheese product of at least a second layer to hot mixing at a temperature such as to produce a homogeneous mixture of the said components,
b) sterilizing the homogeneous mixture in stage a),
c) loading the mixture obtained in stage b) into at least a first tank,
d) loading the cheese product of the said at least a first layer into at least a second tank, and
e) coextruding the products of stages c) and d).

This invention also relates to a cheese product obtainable by the aforesaid process.

## Description

This invention relates to a coextrusion process for preparing a multilayer cheese product and the cheese product so obtained.

A layered cheese product formed of mascarpone and gorgonzola is known.

This product is widely successful as a foodstuff mainly because of the presence of the gorgonzola which imparts a strong sharp taste.

It is also known that gorgonzola is a cheese based on whole milk, with a soft and buttery paste, which has greenish veins caused by seasoning moulds.

From its composition, therefore, it will be understood that gorgonzola can be an optimum culture medium for the growth of microorganisms such as, for example, yeasts.

However, it has been observed that some of the microorganisms present in gorgonzola are of the pathogenic type.

Examples of these pathogenic species are those belonging to the *Coliform* and *Listeria* genera.

In particular, microorganisms belonging to the *Listeria* genus may give rise to an infectious disease which is known by the name of listeriosis. This may be transmitted to both animals, such as cattle, goats and chickens, and to man, causing fever, headaches, stiff neck and muscular pains.

Listeriosis is in fact carried by a gram-positive bacterium belonging to the *Listeria* genus such as *Listeria monocytogenes.*

The presence of microorganisms in gorgonzola gives rise to a number of other disadvantages, such as that of damaging the organoleptic stability of the cheese. In addition to this, fermentation processes associated with the life of the microorganisms within the gorgonzola give rise to the swelling of packaging containing the product. In addition to making transport of the packaging difficult, this also makes its aesthetic appearance unpleasing.

The technical problem underlying this invention is therefore that of providing a process for the preparation of a multilayer cheese product which does not have the abovementioned disadvantages and which at the same time has the organoleptic properties of the known cheese product made from mascarpone and gorgonzola.

This problem has been resolved by a process for the preparation of a multilayer cheese product comprising at least a first layer made of a cheese product selected from a cream-based cheese, a fresh cheese and a milk-based product obtainable by the acid coagulation of whey, and at least a second layer formed of a processed cheese product comprising the stages of:
a) subjecting the components which will form the processed cheese product of the said at least a second layer to hot mixing at a temperature such as to produce a homogeneous mixture of the said components,
b) sterilizing the homogeneous mixture in stage a),
c) loading the mixture obtained in stage b) into at least a first tank,
d) loading the cheese product of the said at least a first layer into at least a second tank, and
e) coextruding the products in stages c) and d).

Preferably the components of stage a) comprise crescenza, cheddar and the flavour of gorgonzola.

Preferably this flavour of gorgonzola is selected from powdered gorgonzola flavour, natural flavour in blue cheese paste and their mixtures.

Examples of such flavours are the gorgonzola flavour in DRAGOCO powder and the natural flavour in IFF blue cheese paste.

The flavour of gorgonzola in the said second layer may also be replaced by gorgonzola as such in quantities of between 3 and 20% (w/w) of the total weight of processed cheese product in the said at least second layer.

Yet more preferably, the components in stage a) comprise from 40 to 60% (w/w) of crescenza and 10 to 30% (w/w) of cheddar and from 2 to 20% (w/w) of gorgonzola flavour in relation to the total weight of processed cheese product in the second layer.

Advantageously, the said processed cheese product in the said second layer also comprises blue-green marbling agents which can confer the typical greenish veined appearance of gorgonzola upon it.

The aforesaid components of stage a) may also include other ingredients such as butter, starch, whey, flavours, water and salt.

A preferred example of a composition suitable for forming the second layer which can be used in stage a) of the process according to the invention comprises from 40% to 60% (w/w) of crescenza, from 10 to 30% (w/w) of cheddar, from 2 to 20% (w/w) of gorgonzola flavour, from 5 to 25% (w/w) of butter, from 0.5 to 4% (w/w) of starch, from 0.2 to 2% (w/w) of powdered whey and from 0.1 to 5% (w/w) of blue cheese flavour, from 0.05 to 0.40% (w/w) of parsley, from 0.1 to 2% (w/w) of salt and from 5 to 15% (w/w) of water.

Even more preferably the aforesaid composition comprises from 50 to 60% (w/w) of crescenza, from 15 to 25% (w/w) of cheddar, from 2 to 12% (w/w) of gorgonzola flavour, from 10 to 20% (w/w) of butter, from 1 to 3% (w/w) of starch, from 0.5 to 1.5% (w/w) of powdered whey, from 1 to 4% (w/w) of blue cheese flavour and parsley in a quantity from 0.1 to 0.3% (w/w), from 0.5 to 1.5% (w/w) of salt and from 7 to 13% (w/w) of water.

In accordance with a preferred embodiment of this invention the blue-green marbling agents present in the second layer of the multilayer cheese product is added after stage a).

Preferably the cheese product of the said at least a first layer is selected from mascarpone, quark cheese, ricotta, and cows' milk caprino.

Even more preferably the cheese product of the said at least a first layer is mascarpone.

Advantageously stage a) is carried out in the presence of steam at a temperature of between 50 and 80°C and for a period of time of between 1 and 15 minutes. Even more advantageously said stage a) is performed in the presence of steam at a temperature of between 65 and 75°C for a period of time of between 3 and 10 minutes.

Stage b) may be carried out by irradiation or indirect heating.

Preferably, stage b) is carried out by indirect heating at a temperature of between 100 and 150°C and at a pressure of between 2 and 8 bars and for a period of time of between 1 and 10 seconds, even more advantageously at a temperature of between 100 and 150°C, at a pressure of between 2 and 6 bar and for a period of time of between 1 and 5 seconds.

When stage b) is carried out by indirect heating, it is followed by a stage b1) of cooling.

A preferred example of this cooling stage is that down to 4°C in a ventilated chamber for a period of time of between 16 and 24 hours.

The coextrusion stage e) in the process according to the invention is preferably carried out at ambient temperature.

In a preferred embodiment, during coextrusion stage e) seven layers are coextruded, of which four are formed by the cheese product selected from a cream-based cheese, a fresh cheese, a milk-based product obtainable by the acid coagulation of milk whey of the said first layer and three formed of the processed cheese product of the said second layer. The said first and second layers are preferably arranged alternately.

In the multilayer cheese product according to the invention the said first and second layers preferably have a thickness of between 1 and 20 mm, even more preferably between 5 and 15 mm.

Preferably coextrusion stage e) is followed by a stage f) of cooling to approximately 4°C followed in turn by a stage g) of cutting the multilayer cheese product obtained. The said cutting stage g) is preferably performed using ultrasound.

The multilayer cheese product according to this invention can then be packed in suitable containers.

Examples of such containers are a hermetically welded polystyrene tub provided with a reclosable lid and a display carton of six packs, preferably of 150 g each. The said tub may also be of other materials such as, for example, polypropylene or polyethylene.

The Applicant has observed that the process according to this invention described above allows to obtain a multilayer cheese product which is substantially free from *Listeria monocytogenes* when measured using the method described in FIL - IDF 143A-1995 (Federation Internationale de Laiterie - International Dairy Federation) in accordance with standard ISO 10560 - 1993.

A second object of this invention is therefore to provide a multilayer cheese product obtainable by using the process described above.

Further features and advantages of this invention will be apparent from the description of some preferred embodiments provided below by way of indication and without restriction with reference to the appended figure, in which:

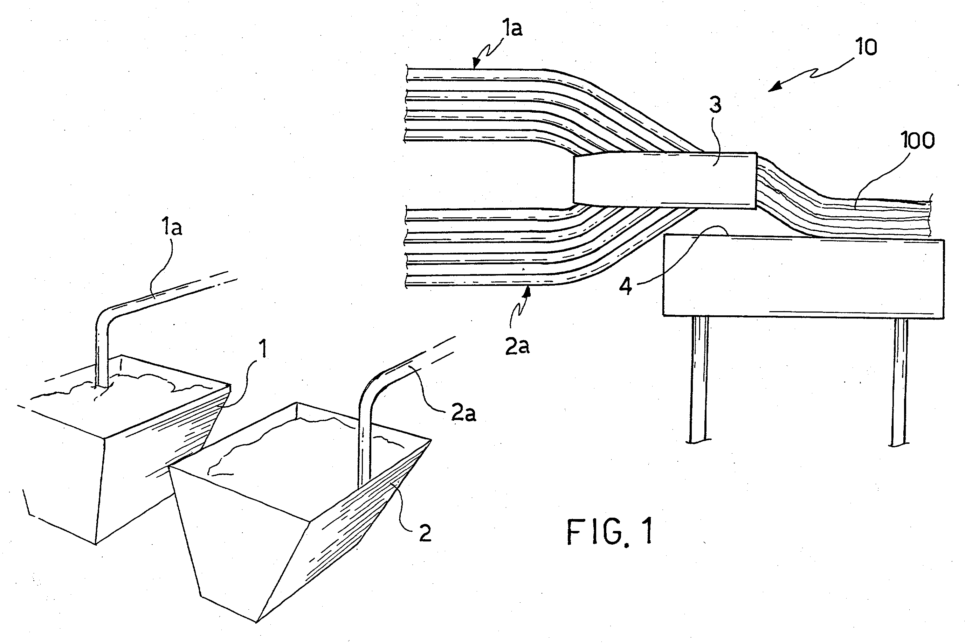

Figure 1 shows a diagrammatical view of the device of the traditional type used to produce the multilayer cheese product according to the invention.

As illustrated in Figure 1, the coextrusion device indicated as a whole by the number (10) is of the traditional type and comprises a first tank (1) and a second tank (2), an extrusion head (3), pipes (1a, 2a) connecting the said first and second tanks (1, 2) to extrusion head (3) and a conveyor belt (4) positioned alongside extrusion head (3).

In use, the first tank (1) houses the mixture of components which will form the second layer of the multilayer cheese product according to the invention after the mixture has been subjected to the first and second heating and cooled to ambient temperature. The second tank (2) houses the cheese product selected from a cream-based cheese, a fresh cheese and a milk-based product obtainable by acid coagulation of whey, which will form the first layer of the multilayer cheese product according to the invention, which is also at ambient temperature. Through connecting pipes (1a, 2a) the products present in the first (1) and the second (2) tank are delivered to extrusion head (3) by a pumping system which is not shown. Conveyor belt (4) located alongside extrusion head (3) carries away the multilayer cheese product (100) according to the invention.

The advantages of the process for preparing the multilayer cheese product according to the invention and the multilayer cheese product so obtained will be immediately apparent from what has been stated above.

A first advantage is that the multilayer cheese product according to the invention has a lesser microorganisms content than the known mascarpone/gorgonzola product, while retaining the same organoleptic characteristics. In particular the multilayer cheese product according to the invention is substantially free from *Listeria monocytogenes,* thus leading to a product which is not a carrier of listeriosis.

The small quantity of microorganisms present in the multilayer cheese product according to the invention also makes it possible to obtain a product which is stable from the organoleptic point of view.

Another advantage of the multilayer cheese product according to the invention is that it can be easily transported once it has been packed, in fact because of the small quantity of microorganisms present in it it does not tend to swell the packaging as a result of fermentation by the microorganisms.

Another advantage of the multilayer cheese product according to the invention is that it is compact and therefore easily packed.

A further advantage of the cheese product according to the invention is that it is a multilayer product. This makes it possible to have layers with different cheese products visible in the foodstuff as desired.

An advantage of the process according to the invention is that it is simple, economic and can be used in equipment of the traditional type.

The following examples will illustrate this invention without however restricting it in any way.

### Example

### Preparation of a multilayer cheese product according to this invention

Composition of the first layer: mascarpone (300 kg),

Composition of the second layer: crescenza (150 kg), cheddar (50 kg), gorgonzola (20 kg), butter (40 kg), starch (5 kg), powdered whey (2.5 kg), blue cheese flavour (8 kg), parsley (0.5 kg), water (25 kg) and salt (0.5 kg).

The components of the composition of the second layer apart from the parsley were mixed hot at a temperature of approximately 70°C for approximately 5 minutes. The parsley was added to the mixture so obtained, which had a pH from 5.2 to 5.3 and a moisture content of from 49.0% to 50%. The mixture so obtained was subjected to a second heating at 120°C for 2-3 seconds at 4 bar. The product obtained was then cooled to room temperature and then loaded into a first tank. The components of the composition of the first layer were instead loaded into a second tank. The masses present in the first and second tanks were coextruded through an extrusion head at ambient temperature in such a way as to form a cheese product having seven layers of which four were formed of the composition of the first layer and three were formed of the composition of the second layer arranged alternately. This product was cooled to 4°C and cut into slices by ultrasound.

A cheese product having seven layers with the following properties:
Thickness of each layer: 12 mm,
Appearance: compact,
*Listeria monocytogenes:* absent,
was obtained in this way.

## Claims

1. Process for the preparation of a multilayer cheese product comprising at least a first layer formed of a cheese product selected from a cream-based cheese, a fresh cheese and a milk-based product obtainable by the acid coagulation of whey and at least a second layer formed of a processed cheese product comprising the stages of:
a) subjecting the components which will form the processed cheese product of the said at least a second layer to hot mixing at a temperature such as to produce a homogeneous mixture of the said components,
b) sterilizing the homogeneous mixture in stage a),
c) loading the mixture obtained in stage b) into at least a first tank,
d) loading the cheese product of the said at least afirst layer into at least a second tank, and
e) coextruding the products of stages c) and d).

2. Process according to Claim 1, in which the components of stage a) include crescenza, cheddar and gorgonzola flavour.

3. Process according to Claim 2, in which the said gorgonzola flavour is selected from powdered gorgonzola flavour, natural flavour in blue cheese paste and their mixtures.

4. Process according to Claim 2, in which the said gorgonzola flavour in the said second layer is gorgonzola as such in a quantity of from 3 to 20% (w/w) with respect to the total weight of the processed cheese product in the said at least second layer.

5. Process according to any one of Claims 1 to 4, in which the components of stage a) comprise from 40 to 60% (w/w) of crescenza and from 10 to 30% (w/w) of cheddar and from 2 to 20% (w/w) of gorgonzola flavour in comparison with the total weight of the processed cheese product in the second layer.

6. Process according to any one of Claims 1 to 5, in which the said processed cheese product in the said second layer also comprises blue-green marbling agents.

7. Process according to Claim 6, in which the components of stage a) also include other ingredients such as butter, starch, whey, flavours, water and salt.

8. Process according to any one of Claims 1 to 7, in which the said composition suitable for forming the second layer which can be used in stage a) comprises from 40 to 60% (w/w) of crescenza, from 10 to 30% (w/w) of cheddar, from 2 to 20% (w/w) of gorgonzola flavour, from 5 to 25% (w/w) of butter, from 0.5 to 4% (w/w) of starch, from 0.2 to 2% (w/w) of powdered whey and from 0.1 to 5% (w/w) of blue cheese flavour, from 0.05 to 0.40% (w/w) of parsley, from 0.1 to 2% (w/w) of salt, and from 5 to 15% (w/w) of water.

9. Process according to any one of Claims 1 to 8, in which the said cheese product in at least a first layer is selected from mascarpone, quark cheese, ricotta and cows' milk caprino.

10. Process according to Claim 9, in which the said cheese product in at least a first layer is mascarpone.

11. Process according to any one of Claims 1 to 10, in which stage a) is carried out in the presence of steam at a temperature of between 50 and 80°C and for a period of time of between 1 and 15 minutes.

12. Process according to any one of Claims 1 to 11, in which stage b) is performed by indirect heating.

13. Process according to Claim 12, in which stage b) is carried out by indirect heating at a temperature between 100 and 150°C and a pressure of between 2 and 8 bars and for a period of time of between 1 and 10 seconds.

14. Process according to any one of Claims 1 to 13, in which stage b) is followed by a cooling stage b1).

15. Process according to any one of Claims 1 to 14, in which the coextrusion stage e) in the process according to this invention is carried out at ambient temperature.

16. Multilayer cheese product obtainable by using the process described in Claims 1 to 15.

17. Multilayer cheese product according to Claim 16 substantially free from *Listeria monocytogenes* when measured using the method described in FIL - IDF 143A-1995 (Federation Internationale de Laiterie - International Dairy Federation) in accordance with standard ISO 10560 - 1993.
